# EUROPEAN PATENT APPLICATION

(11) **EP 4 576 344 A1**
(43) Date of publication of application: **25.06.2025**
(21) Application number: 24218535.3
(22) Date of filing: 10.12.2024
(51) Int. Cl.: H01M 50/10

(54) **SEALING MEMBER, CAP OF BATTERY AND BATTERY**

(30) Priority: 18.12.2023 CN 202323465370 U; 11.07.2024 WO PCT/CN2024/104955
(71) Applicant: Eve Energy Co., Ltd., Huizhou, Guangdong 516006 (CN)
(72) Inventor: LI, Jidong, Huizhou, Guangdong, 516006 (CN); FU, Zhibo, Huizhou, Guangdong, 516006 (CN); WANG, Xingjian, Huizhou, Guangdong, 516006 (CN); SONG, Pengyuan, Huizhou, Guangdong, 516006 (CN)
(74) Representative: Berggren Oy

(57) **Abstract**

A sealing member, a cap of a battery and a battery are provided by the present disclosure. The sealing member is configured to insulate a cap from a housing of a battery and seal a gap between the cap and the housing. The sealing member comprises a body. The body comprises a first sub-body located between the housing and the cap. The melting point of at least part of the first sub-body is higher than the temperature in the space enclosed by the housing when the battery is in the state of maximum discharge.

## Description

### BACKGROUND OF DISCLOSURE

Generally, a sealing ring is taken to seal between a housing and a cap of a battery, which will cause an excessive internal temperature of the battery during a high-power discharge of the battery.

### SUMMARY

The excessive internal temperature of the battery would cause the sealing ring at the part between the housing and the cap of the battery to melt. Thus, the housing and the cap contact directly, resulting in a risk of short circuit of the battery.

According to one or more embodiments of the present disclosure, a sealing member is configured to insulate a cap from a housing of a battery and seal a gap between the cap and the housing, the sealing member including a body, the body including a first sub-body located between the housing and the cap;
wherein, a melting point of at least part of the first sub-body is higher than a temperature in the space enclosed by the housing when the battery is in the state of maximum discharge.

According to one or more embodiments of the present disclosure, a cap of a battery includes a sealing member.
According to one or more embodiments of the present disclosure, a battery includes a cap of the battery.

According to one or more embodiments of the present disclosure, the melting point of at least part of the first sub-body is higher than the temperature in the space enclosed by the housing when the battery is in the state of maximum discharge. That is, the first sub-body would not melt or would partially melt when the battery is in the state of maximum discharge, so that the first sub-body can still separate the cap and the housing of the battery when the battery is in the state of maximum discharge, thereby avoiding contact between the housing and the cap to cause short circuit of the battery.

### BRIEF DESCRIPTION OF THE DRAWINGS

FIG. 1 is a schematic diagram of assembly of a sealing ring made of PBT of a general battery;
FIG. 2 is a schematic diagram of a structure of the battery in FIG. 1 that melts when a temperature of a surface of the battery is in an A value range;
FIG. 3 is a schematic diagram of a structure of a sealing member when a temperature of a surface of a battery is in the A value range, according to one or more embodiments of the present disclosure;
FIG. 4 is a perspective schematic diagram of a structure of the sealing member according to one or more embodiments of the present disclosure;
FIG. 5 is a cross-sectional schematic diagram of a cap of a battery according to one or more embodiments of the present disclosure; and
FIG. 6 is a cross-sectional schematic diagram of a battery according to one or more embodiments of the present disclosure.

### List of the reference signs:

100 sealing member; 1 body; 11 first sub-body; 12 second sub-body; 2 cap; 2A first side; 3 housing.

### DETAILED DESCRIPTION

In the description of the present disclosure, unless otherwise expressly indicated and defined, the terms "connecting", "bonding", "fixing", and the like, are to be understood in a broad sense, for example, as a fixed connection or a detachable connection, as a whole, as a mechanical connection or an electrical connection, as a direct connection or indirect connection by means of an intermediate medium, or as an internal communication of two elements or an interaction of the two elements. The specific meaning of the above terms in the present disclosure may be understood by one of ordinary skill in the art as the case may be.

In the present disclosure, unless otherwise expressly indicated and defined, the expression of a first feature "on" or "beneath" a second feature may include a case where the first feature and the second feature are in direct contact, or a case where the first feature and the second feature are not in direct contact but through an additional feature therebetween. In addition, the expression of the first feature "on", "above", or "over" the second feature may include a case where the first feature is directly above and obliquely above the second feature, or merely indicate that a level of the first feature is higher than that of the second feature. The expression of the first feature "beneath", "under", or "below" the second feature may include a case where the first feature directly under and obliquely under the second feature, or merely indicate that the level of the first feature is lower than that of the second feature.

In the description of the embodiment, the terms "upper", "lower", "right", etc., indicating orientation or positional relationships are based on the orientation or positional relationships shown in the drawings and are intended only for convenience of description and simplification of operation, and do not indicate or imply that the device or element referred to must have a particular orientation, be constructed and operated in a particular orientation, and therefore they cannot be construed as a limitation on the present disclosure. In addition, the terms "first" and "second" are used merely for the purpose of distinguishing and not in a particular sense.

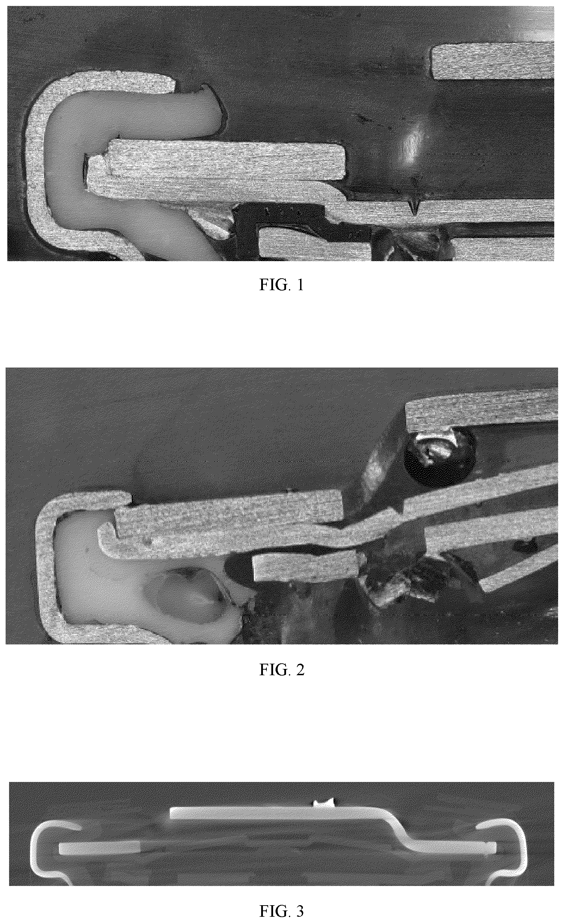

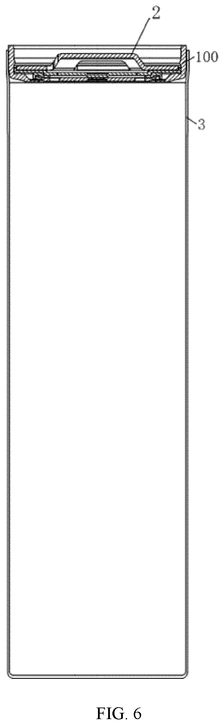

A sealing member, a cap of a battery and a battery shown in FIGS. 1 to 6 are provided according to one or more embodiments of the present disclosure.

Referring to FIGS. 3 to 6, in one or more embodiments embodiments of the present disclosure, a sealing member 100 is configured to insulate a cap 2 from a housing 3 of a battery and seal a gap between the cap 2 and the housing 3. The sealing member 100 includes a body 1 including a first sub-body 11. The first sub-body 11 is located between the housing 3 and the cap 2. A melting point of at least part of the first sub-body 11 is higher than the temperature within a space enclosed by the housing 3 when the battery is in a state of maximum discharge,

In one or more embodiments of the present disclosure, the melting point of at least part of the first sub-body is higher than the temperature in the space enclosed by the housing when the battery is in the state of maximum discharge. That is, the first sub-body would not melt or would partially melt when the battery is in the state of maximum discharge, so that the first sub-body can still separate the cap and the housing of the battery when the battery is in the state of maximum discharge, thereby avoiding contact between the housing and the cap to cause short circuit of the battery.

It should be noted that, since the largest heat is generated within the housing 3 and close to terminals of the battery during actual application, the melting point of at least part of the first sub-body 11 is provided to be higher than the temperature within the space enclosed by the housing 3 when the battery is in the state of maximum discharge. The temperature within the space enclosed by the housing 3 also includes the temperature of the region of the terminals of the battery enclosed by the housing 3. Thus, it is necessary to avoid the sealing member 100 between the housing 3 and the cap 2 from melting, which causes the housing 3 to contact directly with the cap 2. That is, it is necessary to improve the heat resistance of the sealing member 100 between the housing 3 and the cap 2. Therefore, a first sub-body 11 is provided to have a melting point higher than the temperature within the space enclosed by the housing 3 when the battery is in the state of maximum discharge.

In one or more embodiments of the present disclosure, the cap 2 further includes a first side 2A facing towards the housing 3 in an axial direction of the housing 3. The melting point of at least part of the first sub-body 11 between the first side 2A and the housing 3 is higher than the temperature in the space enclosed by the housing 3 when the battery is in the state of maximum discharge. In the present embodiment, since part of the first sub-body 11 between the first side 2A and the housing 3 is prone to melt when the battery is in the state of maximum discharge, it is necessary to ensure that the first sub-body 11 between the first side 2A and the housing 3 would not melt or would partially melt when the battery is in the state of maximum discharge, so as to avoid contact between the housing 3 and the cap 2 to cause a short circuit in the battery.

It should be noted that, generally, a sealing ring provided between a housing and a cap of a battery is made of polybutylene terephthalate. In one or more embodiments of the present disclosure, a temperature of the surface of the housing 3 is detected when the battery is in the state of maximum discharge, and the measured temperature of the surface of the housing 3 is A. The temperature A meets: 120 °C < A ≤ 140 °C. Referring to FIGS. 1 and 2, generally, when the temperature of the surface of the housing 3 is in the range of 120 °C <_ A ≤ 140 °C, the sealing ring made of polybutylene terephthalate melts at a corresponding position between the housing 3 and the cap 2 of the battery. Referring to FIG. 3, in one or more embodiments of the present disclosure, the melting point of the first sub-body 11 is higher than the temperature within the space enclosed by the housing 3 when the battery is in the state of maximum discharge. That is, the melting point of at least part of the first sub-body 11 is higher than the melting point of polybutylene terephthalate. Thus, when the battery is in the state of maximum discharge, the first sub-body 11 would not melt or only partially melt, so as to avoid direct contact between the housing 3 and the cap 2 to cause a short circuit in the battery.

The material of the first sub-body 11 includes at least one of soluble polytetrafluoroethylene and polyphenylene sulfide. In one embodiment, the material of the first sub-body 11 is soluble polytetrafluoroethylene (Polyfluoroalkoxy, PFA), in another embodiment, the material of the first sub-body 11 is polyphenshort circuitylene sulfide (PPS), and in yet another embodiment, the material of the first sub-body 11 may be a mixture of soluble polytetrafluoroethylene (Polyfluoroalkoxy, PFA) and polyphenylene sulfide (PPS). This ensures that when the battery is discharged at high power, the first sub-body 11 located between the housing 3 and the cap 2 of the battery would not melt or would partially melt, so as to avoid direct contact between the battery housing 3 and the cap 2 to cause short circuit in the battery.

It should be noted that the melting point of soluble polytetrafluoroethylene (PFA) is between 290 °C and 312 °C, the melting point of polyphenylene sulfide (PPS) is between 280 °C and 290 °C, and the melting point of polybutylece terephthalate (PBT) is between 220 °C and 230 °C. That is, the melting points of both soluble polytetrafluoroethylene and polyphenylene sulfide are higher than that of polybutylece terephthalate, thereby avoiding the risk of melting of the first sub-body 11 made of at least one of soluble polytetrafluoroethylene (PFA) and polyphenylene sulfide (PPS) during high-power discharge of the battery.

In addition, since the temperature of space enclosed by the housing 3 is positively correlated with the temperature of the surface of the housing 3. To be specific, when the temperature of the space enclosed by the housing 3 rises, the temperature of the surface of the housing 3 also rises. In order to facilitate experimental members to perform tests, in one or more embodiments of the present disclosure, by detecting the temperature of the surface of the housing 3, change of the temperature of the space enclosed by the housing 3 is obtained, and the state of the sealing member located between the cap 2 and the housing 3 is detected. A temperature detection device is taken to detect the temperature of the surface of the battery. In one embodiment of the present disclosure, the temperature detection device includes temperature sensing bundles.

It can be understood that when the battery is in the state of maximum discharge, the temperature of the surface of the housing 3 is measured to be in a range from 120 °C to 140 °C, and a temperature B of the space enclosed by the housing 3 is in a range from 220 °C to 280 °C. That is, generally, when the battery is in the state of maximum discharge, the temperature B of the space enclosed by the housing 3 is higher than the melting point of polybutylene terephthalate, which may cause the sealing ring made of polybutylene terephthalate to melt. In contrast, in one more more embodiments of the present disclosure, the temperature of the space enclosed by the housing 3 is lower than the melting point of at least one of soluble polytetrafluoroethylene and polyphenylene sulfide. That is, the first sub-body 11 made of at least one of soluble polytetrafluoroethylene and polyphenylene sulfide would not melt.

In one or more embodiments of the present disclosure, the first sub-body 11 has a first state when the temperature of the surface of the housing 3 is lower than the A value range, and a second state when the temperature of the surface of the housing 3 is in the A value range. The thickness of the first sub-body 11 between the housing 3 and the cap 2 when it is in the first state is defined as D1, and the thickness of the first sub-body 11 between the housing 3 and the cap 2 when it is in the second state is defined as D2. D1 and D2 meet: D2 ≥ 0.8D1. That is, when the first sub-body 11 is mainly made of at least one of soluble polytetrafluoroethylene and polyphenylene sulfide, the first sub-body 11 would not melt, that is, D2 is equal to D1. And when the first sub-body 11 is partially made of at least one of soluble polytetrafluoroethylene and polyphenylene sulfide, the first sub-body 11 would partially melt. This ensures that the thickness of the first sub-body 11 after melting is still greater than 80% of the original thickness, thereby retaining a sufficient safety distance between the housing 3 and the cap 2 of the battery.

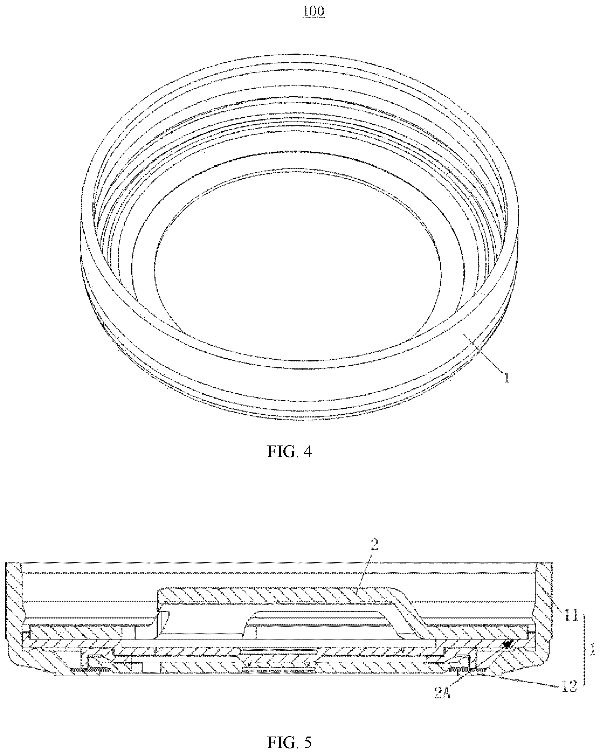

Referring to FIG. 5, the body 1 further includes a second sub-body 12 connected with the first sub-body 11, and the material of the second sub-body 12 is the same as or different from that of the first sub-body 11. When the battery is in a state of high-power discharge, that is, a high-temperature state, the first sub-body 11 would not melt to the extent where the housing 3 and the cap 2 of the battery contact directly. Materials of other parts of the body 1 are not limited in this embodiment. The body 1 further includes a second sub-body 12 connected with the first sub-body 11. The first sub-body 11 and the second sub-body 12 are provided integrally. The material of the second sub-body 12 is not limited, and the melting point of the second sub-body 12 may be higher than that of the first sub-body 11, be the same as that of the first sub-body 11, or be lower than that of the first sub-body 11.

In one or more embodiments of the present disclosure, the material of the second sub-body 12 includes at least one of soluble polytetrafluoroethylene, polyphenylene sulfide and polybutylene terephthalate. That is, with the material of the first sub-body 11 is at least one of soluble polytetrafluoroethylene and polyphenylene sulfide, the material of the second sub-body 12 can be at least one of soluble polytetrafluoroethylene, polyphenylene sulfide and polybutylene terephthalate, or a mixture of at least one or at least two of soluble polytetrafluoroethylene, polyphenylene sulfide and polybutylene terephthalate.

In one or more embodiments of the present disclosure, when the material of the second sub-body 12 is polybutylene terephthalate, the roughness of the first sub-body 11 is greater than that of the second sub-body 12. When the body 1 is mounted within the housing 3 of the battery, glue needs to be coated on the surface of the body 1. When the material of the first sub-body 11 is at least one of soluble polytetrafluoroethylene and polyphenylene sulfide, the glue has non-adhesiveness due to the same material as the first sub-body 11, resulting in that the glue is hard to adhere to the first sub-body 11. Therefore, the surface of the first sub-body 11 needs to be processed to enhance the roughness of the surface of the first sub-body 11, thereby improving the adhesion of the surface of the first sub-body 11 to the glue. It can be understood that the roughness of the first sub-body 11 is greater than that of the second sub-body 12, so that the glue is prone to adhere to the surface of the body 1.

In addition, in one or more embodiments of the present disclosure, the body 1 is provided in a shape of a hollow ring. Thus, the body 1 is prone to be mounted in the housing 3 of the battery. The body 1 has an inner cavity for mounting components such as the cap 2, an explosion-proof sheet.

In one or more embodiments of the present disclosure, it is further provided a cap of a battery, which includes a sealing member 100. The sealing member 100 is as described above. Since the cap of the battery adopts all the solutions of all the above embodiments, it at least has the beneficial effects brought by the solutions of the above embodiments, which would not be repeated here.

In one or more embodiments of the present disclosure, it is further provided a battery, which includes a cap of the battery. The cap is as described above. Since the present battery adopts all the solutions of all the above embodiments, it at least has the beneficial effects brought by the technical solutions of the above embodiments, which would not be repeated here.

A 21700-type cylindrical battery is used as an embodiment of the present disclosure for illustration. A sealing member 100 is mounted in the 21700-type cylindrical battery (hereinafter described briefly as "the battery"). The sealing member 100 is arranged at a terminal of a housing 3 of the battery. A cap 2 is arranged in a region enclosed by the sealing member 100. When the battery is assembled, the terminal of the housing 3 of the battery will be bent, so that part of the sealing member 100 is arranged between the cap 2 and the housing 3. This part is a first sub-body 11. The other part of the sealing member 100 is arranged between components such as an explosion-proof sheet and the housing 3. This part is a second sub-body 12. The material of the first sub-body 11 includes at least one of soluble polytetrafluoroethylene and polyphenylene sulfide. Therefore, when the internal temperature of the battery is too high, the first sub-body 11 made of at least one of soluble polytetrafluoroethylene and polyphenylene sulfide would not melt, or would partially melt, so as to avoid direct contact between the housing 3 and the cap 2 to cause short circuit in the battery. The environment where the second sub-body 12 is located does not have requirements of high temperature resistance of the first sub-body 11, so the material of the second sub-body 12 may be the same as different from that of the first sub-body 11. This is because that the material of the second sub-body 12 is at least one of soluble polytetrafluoroethylene, polyphenylene sulfide and polybutylene terephthalate.

## Claims

1. A sealing member configured to insulate a cap (2) from a housing (3) of a battery and seal a gap between the cap (2) and the housing (3), comprising a body (1), wherein the body (1) comprises a first sub-body (11) located between the housing (3) and the cap (2);
wherein, a melting point of at least part of the first sub-body (11) is higher than the temperature in the space enclosed by the housing (3) when the battery is in the state of maximum discharge.

2. The sealing member according to claim 1, wherein the temperature of the surface of the housing (3) when the housing (3) is in the state of maximum discharge is defined as A, wherein A meets: 120 °C < A ≤ 140 °C; and
the material of the first sub-body (11) comprises at least one of soluble polytetrafluoroethylene and polyphenylene sulfide.

3. The sealing member according to claim 2, wherein the temperature within the housing when the housing (3) is in the state of maximum discharge is defined as B, wherein B meets: 220 °C <_ B ≤ 280 °C.

4. The sealing member according to claim 2, wherein the first sub-body (11) has a first state when the temperature of the surface of the housing (3) is lower than a range of A, and a second state when the temperature of the surface of the housing (3) is in the range of A; and
the thickness of the first sub-body (11) between the housing (3) and the cap (2) when the first sub-body (11) is in the first state is defined as D1, and the thickness of the first sub-body (11) between the housing (3) and the cap (2) when the first sub-body (11) is in the second state is defined as D2,
wherein D1 and D2 meets: D2 ≥ 0.8D1.

5. The sealing member according to claim 2, wherein the body (1) further comprises a second sub-body (12) connected with the first sub-body (11), and the material of the second sub-body (12) is the same as or different from the material of the first sub-body (11).

6. The sealing member according to claim 5, wherein the material of the second sub-body (12) comprises at least one of soluble polytetrafluoroethylene, polyphenylene sulfide and polybutylene terephthalate.

7. The sealing member according to claim 5, wherein the material of the second sub-body (12) is polybutylene terephthalate; and
the roughness of the first sub-body (11) is greater than that of the second sub-body (12).

8. The sealing member according to any one of claims 1 to 7, wherein the cap (2) further comprises a first side (2A) facing towards the housing (3) in an axial direction of the housing (3), and a melting point of at least part of the first sub-body (11) between the first side (2A) and the housing (3) is higher than the temperature of the space enclosed by the housing (3) when the battery is in the state of maximum discharge.

9. The sealing member according to any one of claims 1 to 7, wherein the body (1) is configured in a hollow annular.

10. A cap of a battery, comprising:
a sealing member (100) according to any one of claims 1 to 9; and
a cap (2);
wherein, a first sub-body (11) of the sealing member (100) is located between the cap (2) and a housing (3) of the battery.

11. The cap according to claim 10, wherein the temperature of the surface of the housing (3) when the housing (3) is in the state of maximum discharge is defined as A, wherein A meets: 120 °C <_ A ≤ 140 °C; and
the material of the first sub-body (11) comprises at least one of soluble polytetrafluoroethylene and polyphenylene sulfide.

12. The cap according to any one of claims 10 to 11, wherein the cap (2) further comprises a first side (2A) facing towards the housing (3) in an axial direction of the housing (3), and a melting point of at least part of the first sub-body (11) between the first side (2A) and the housing (3) is higher than the temperature of the space enclosed by the housing (3) when the battery is in the state of maximum discharge.

13. A battery, comprising:
a housing (3); and
a cap of the battery as claimed in claim 10, wherein the cap of the battery is disposed at a terminal of the housing (3) and is located in the space enclosed by the housing (3).

14. The battery according to claim 13, wherein the temperature of the surface of the housing (3) when the housing (3) is in the state of maximum discharge is defined as A, wherein A meets: 120 °C <_ A ≤ 140 °C; and
the material of the first sub-body (11) comprises at least one of soluble polytetrafluoroethylene and polyphenylene sulfide.

15. The battery according to any one of claims 13 to 14, wherein the cap (2) further comprises a first side (2A) facing towards the housing (3) in an axial direction of the housing (3), and a melting point of at least part of the first sub-body (11) between the first side (2A) and the housing (3) is higher than the temperature of the space enclosed by the housing (3) when the battery is in the state of maximum discharge.
